# EUROPEAN PATENT APPLICATION

(11) **EP 4 653 304 A1**
(43) Date of publication of application: **26.11.2025**
(21) Application number: 23924658.0
(22) Date of filing: 01.03.2023
(51) Int. Cl.: B62M 6/40, B62M 11/04, B62M 11/14

(54) **MID-DRIVE ELECTRIC MOTOR AND ELECTRIC ASSIST BICYCLE**

(71) Applicant: SZ DJI Technology Co., Ltd., 518000 Shenzhen (CN)
(72) Inventor: ZOU, Daming, Shenzhen, Guangdong 518000 (CN); DU, Tao, Shenzhen, Guangdong 518000 (CN); JI, Baofeng, Shenzhen, Guangdong 518000 (CN); ZHOU, Chengke, Shenzhen, Guangdong 518000 (CN); BIN, Peng, Shenzhen, Guangdong 518000 (CN); QIU, Zhenping, Shenzhen, Guangdong 518000 (CN); LV, Qiang, Shenzhen, Guangdong 518000 (CN)
(74) Representative: Appelt, Christian W.
(86) International application number: PCT/CN2023/079121
(87) International publication number: WO 2024/178688

(57) **Abstract**

A mid-mounted motor comprises a driving mechanism, a transmission mechanism, and an output mechanism. The transmission mechanism comprises a sun gear, a planetary gear structure, and a ring gear structure. The sun gear is connected in transmission with the driving mechanism and meshes with the planetary gear structure, and the planetary gear structure meshes with at least part of the ring gear structure; the output mechanism comprises a first transmission component, which is arranged on the transmission mechanism. The first transmission component transmits the power delivered by the driving mechanism to the transmission mechanism to other components through a gear meshing transmission mode. The present invention is also related to a power-assisted bicycle.

## Description

### Technical Field

The present application relates to the technical field of power-assisted bicycles, and particularly to a mid-mounted motor and a power-assisted bicycle.

### Background Art

With the promotion of the concepts of low-carbon living and healthy travel, bicycles have gradually returned to the public's view. For long-distance riding or rugged mountain roads and forest trails, higher physical endurance is required from cyclists. To meet these demands, electric power-assisted bicycles have emerged. Electric power-assisted bicycles provide assistance only when the rider pedals, maintaining the enjoyment of cycling. In electric power-assisted bicycles, a mid-mounted motor is placed in the middle of the frame. However, in the related technology, the mid-mounted motor has an unreasonable structural design, making it difficult to balance an appropriate transmission ratio and a compact size.

### Summary of the Invention

The present application provides a mid-mounted motor and a power-assisted bicycle, aiming to balance an appropriate transmission ratio and a compact size.

In a first aspect, some embodiments of the present application provide a mid-mounted motor, comprising:
a driving mechanism;
a transmission mechanism, comprising a sun gear, a planetary gear structure, and a ring gear structure, wherein the sun gear is connected in transmission with the driving mechanism, the sun gear engages with the planetary gear structure, and the planetary gear structure engages with at least a portion of the ring gear structure; and
an output mechanism, comprising a first transmission component, wherein the first transmission component is disposed on the transmission mechanism, and the first transmission component transmits, by way of gear meshing transmission, a power transmitted to the transmission mechanism from the driving mechanism to other components.

In a second aspect, some embodiments of the present application provide a power-assisted bicycle, comprising:
a body; and
a mid-mounted motor as set forth above, connected to the body.

The embodiments of the present application provide a mid-mounted motor and a power-assisted bicycle. When the power-assisted bicycle moves forward, the driving mechanism operates to drive the sun gear to rotate. The sun gear meshes with the planetary gear structure, causing the sun gear to drive the planetary gear structure to rotate. The planetary gear structure drives the first transmission component to rotate, and the first transmission component transmits the power output from the driving mechanism to the transmission mechanism through gear meshing, thereby assisting the power-assisted bicycle equipped with the mid-mounted motor in moving forward. The mid-mounted motor features a reasonable structural design and a compact structure, enabling a high transmission ratio within a limited space, thereby balancing a small size with an appropriate transmission ratio.

It should be understood that the above general description and the following detailed description are merely exemplary and explanatory and do not limit the disclosure of the embodiments of the present application.

### Brief Description of the Drawings

In order to more clearly illustrate the technical solutions of the embodiments of the present application, a brief introduction to the drawings used in the embodiment descriptions is provided below. It is apparent that the drawings described below represent some embodiments of the present application. For a person skilled in the art, other drawings may also be obtained based on these drawings without creative effort.
FIG. 1 is a sectional view of a mid-mounted motor provided in some embodiments of the present application.
FIG. 2 is a schematic diagram of a partial structure of a mid-mounted motor provided in some embodiments of the present application.
FIG. 3(a) is a sectional view of a mid-mounted motor provided in some embodiments of the present application.
FIG. 3(b) is a partial sectional view of a mid-mounted motor provided in some embodiments of the present application.
FIG. 3(c) is a schematic diagram of a partial structure of a mid-mounted motor provided in some embodiments of the present application.
FIG. 3(d) is an exploded schematic diagram of a partial structure of a mid-mounted motor provided in some embodiments of the present application.
FIG. 4 is an exploded schematic diagram of a mid-mounted motor provided in some embodiments of the present application.
FIG. 5 is a partial sectional view of a mid-mounted motor provided in some embodiments of the present application.
FIG. 6 is a schematic diagram of a partial structure of a mid-mounted motor provided in some embodiments of the present application.
FIG. 7 is an exploded schematic diagram of a partial structure of a mid-mounted motor provided in some embodiments of the present application.
FIG. 8 is a partial sectional view of a mid-mounted motor provided in some embodiments of the present application.
FIG. 9 is a sectional view of a mid-mounted motor provided in some embodiments of the present application.
FIG. 10 is a sectional view of a mid-mounted motor provided in some embodiments of the present application.
FIG. 11 is a schematic diagram of the principle of a mid-mounted motor provided in some embodiments of the present application.
FIG. 12 is a partial sectional view of a mid-mounted motor provided in some embodiments of the present application.
FIG. 13 is a schematic diagram of the structure of a power-assisted bicycle provided in some embodiments of the present application.

Description of the reference symbols:
100, mid-mounted motor;
10, driving mechanism; 11, stator; 12, rotor; 121, motor output shaft; 1211, spline shaft;
20, transmission mechanism; 21, sun gear; 211, through hole; 22, planetary gear structure; 221, first planetary gear; 222, second planetary gear; 2221, protruding part; 2222, through part; 23, ring gear structure; 231, ring gear; 24, planetary carrier; 241, first planetary carrier; 242, second planetary carrier; 25, gear connection shaft;
30, output mechanism; 31, first transmission component; 32, second transmission component; 33, output assembly; 331, output part; 3311, exposed part; 3312, non-exposed part; 332, crank shaft; 333, detection element; 334, first clutch; 335, second clutch; 336, ninth bearing; 337, tenth bearing;
40, casing; 41, first casing; 42, second casing; 43, accommodation chamber;
51, first bearing; 52, second bearing; 53, third bearing; 54, fourth bearing; 56, sixth bearing; 58, eighth bearing;
200, body; 201, sprocket assembly; 2011, sprocket transmission structure; 2012, chain; 202, wheel; 203, crank; 204, pedal.

### Description of the Embodiments

The technical solutions in the embodiments of the present application will be clearly and comprehensively described below in conjunction with the accompanying drawings. It is evident that the described embodiments are only a part of the embodiments of the present application and not all of them. Based on the embodiments of the present application, all other embodiments obtained by a person skilled in the art without creative efforts shall fall within the scope of protection of the present application.

In the description of the present application, it should be understood that terms such as "center," "longitudinal," "transverse," "length," "width," "thickness," "upper," "lower," "front," "rear," "left," "right," "vertical," "horizontal," "top," "bottom," "inner," "outer," "clockwise," and "counterclockwise" indicate orientation or positional relationships based on those shown in the accompanying drawings. These terms are only used for convenience in describing the present application and simplifying the description and are not intended to indicate or imply that the referenced devices or components must have a specific orientation or be configured and operated in a specific orientation. Therefore, they should not be construed as limitations on the present application. Additionally, the terms "first" and "second" are only used for descriptive purposes and should not be understood as indicating or implying relative importance or implicitly specifying the number of the referenced technical features. Thus, features defined with "first" or "second" may explicitly or implicitly include one or more of the features. In the description of the present application, "multiple/a plurality of" means two or more unless explicitly and specifically defined otherwise.

It should also be understood that the terms used in this specification are solely for the purpose of describing specific embodiments and are not intended to limit the present application. As used in this specification and the appended claims, unless the context clearly indicates otherwise, the singular forms of "a," "an," and "the" are intended to include the plural forms as well.

Furthermore, it should be further understood that the term "and/or" as used in this specification and the appended claims refers to any and all possible combinations of one or more of the associated listed items and includes such combinations.

A mid-mounted motor is a core component of power-assisted bicycles such as electric bicycles and serves as the "engine" that enables power assistance. The output torque of the mid-mounted motor is given by TO = ni * Tm, where TO represents the total output torque of the mid-mounted motor (i.e., the external output torque of the mid-mounted motor), ni is the transmission ratio of the mid-mounted motor, and Tm is the output torque of the rotor of the mid-mounted motor. To increase the total output torque of the mid-mounted motor, it can be achieved by increasing at least one of the rotor's output torque and the transmission ratio of the mid-mounted motor.

The mid-mounted motor accounts for approximately 10-15% of the total weight of the power-assisted bicycle. Its size and weight significantly affect the overall appearance of the bicycle, while its output torque has a considerable impact on the user's driving or riding experience. Therefore, reducing the size and weight of the mid-mounted motor, or increasing the output torque while maintaining the same size and weight, is one of the current research directions for mid-mounted motors.

The present application provides a mid-mounted motor and a power-assisted bicycle to balance an appropriate transmission ratio and a compact size, thereby ensuring that the mid-mounted motor achieves both a suitable output torque and a reduced size.

Below, some embodiments of the present application will be described in detail in conjunction with the accompanying drawings. Where there is no conflict, the following embodiments and the features within them may be combined with each other.

The mid-mounted motor provided in the embodiments of the present application is used for a power-assisted bicycle. The power-assisted bicycle may include electric-assisted bicycles and similar vehicles.

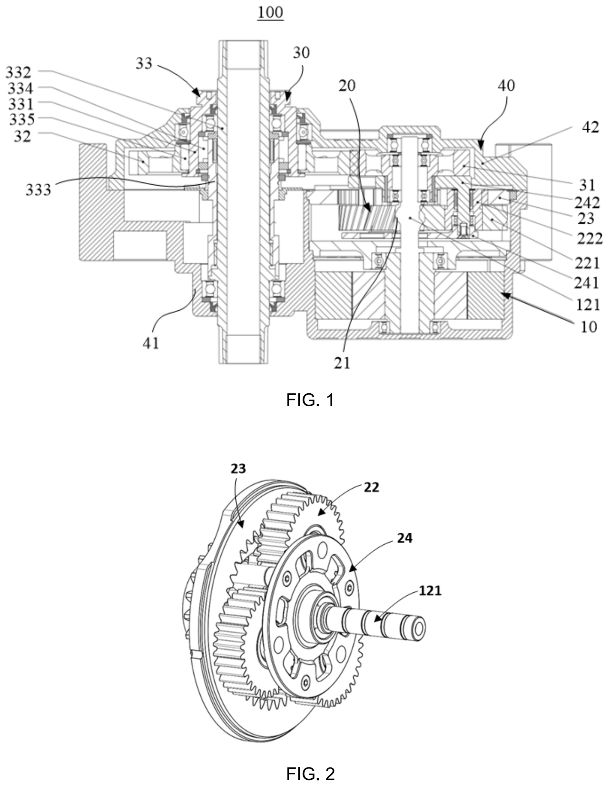

With reference to FIG. 1 and FIG. 2, the mid-mounted motor 100 includes a driving mechanism 10, a transmission mechanism 20, and an output mechanism 30. The transmission mechanism 20 includes a sun gear 21, a planetary gear structure 22, and a ring gear structure 23. The sun gear 21 is drivingly connected to the driving mechanism 10, the sun gear 21 meshes with the planetary gear structure 22, and the planetary gear structure 22 meshes with at least part of the ring gear structure 23. The output mechanism 30 includes a first transmission component 31, which is provided on the transmission mechanism 20. The first transmission component 31 transmits the power delivered by the driving mechanism 10 to the transmission mechanism 20 to other components through a gear meshing transmission mode.

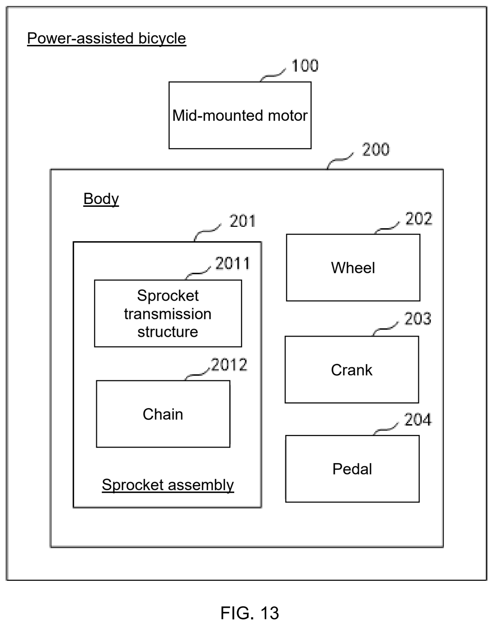

In the mid-mounted motor 100 of the above embodiment, when the power-assisted bicycle moves forward, the driving mechanism 10 operates to drive the rotation of the sun gear 21. The sun gear 21 meshes with the planetary gear structure 22, causing the sun gear 21 to drive the planetary gear structure 22 to rotate. The planetary gear structure 22, in turn, drives the first transmission component 31 to rotate. The first transmission component 31 transmits the power delivered by the driving mechanism 10 to the transmission mechanism 20 to other components through a gear meshing transmission mode, thereby assisting the power-assisted bicycle equipped with the mid-mounted motor 100 in moving forward. The mid-mounted motor 100 features a well-designed and compact structure, enabling a high transmission ratio within a relatively small space. This design balances the characteristics of a small size and an appropriate transmission ratio, thereby also ensuring a suitable output torque of the mid-mounted motor 100 (where the output torque refers to the external output torque of the mid-mounted motor 100). The mid-mounted motor 100 integrates more seamlessly with the body 200 of the power-assisted bicycle (refer to FIG. 13), enhancing the reliability of the mid-mounted motor 100 and improving the user's riding or driving experience.

It is understandable that, compared to an assist unit in which the first transmission component 31 transmits power outward in a non-gear meshing transmission mode, the mid-mounted motor 100 of this embodiment can achieve a higher transmission ratio under the same volume and/or weight conditions. Consequently, the mid-mounted motor 100 provides greater output torque, integrates more seamlessly with the body 200 of the power-assisted bicycle, offers higher reliability, and enhances the user's riding or driving experience.

It is understandable that, compared to an assist unit in which the first transmission component 31 transmits power outward in a non-gear meshing transmission mode, the mid-mounted motor 100 of this embodiment can have a smaller size or lighter weight under the same transmission ratio. This results in a higher degree of integration between the mid-mounted motor 100 and the body 200 of the power-assisted bicycle, providing a better riding or driving experience for the user.

It is also understandable that, compared to an assist unit in which the first transmission component 31 transmits power outward in a non-gear meshing transmission mode, the mid-mounted motor 100 of this embodiment has both a smaller size and lighter weight while achieving a higher transmission ratio. As a result, the mid-mounted motor 100 provides greater output torque and can achieve a high transmission ratio within a smaller space and with a lighter weight. This design balances the characteristics of small size, low weight, and an appropriate transmission ratio, leading to a higher degree of integration between the mid-mounted motor 100 and the body 200 of the power-assisted bicycle, ultimately enhancing the user's riding or driving experience.

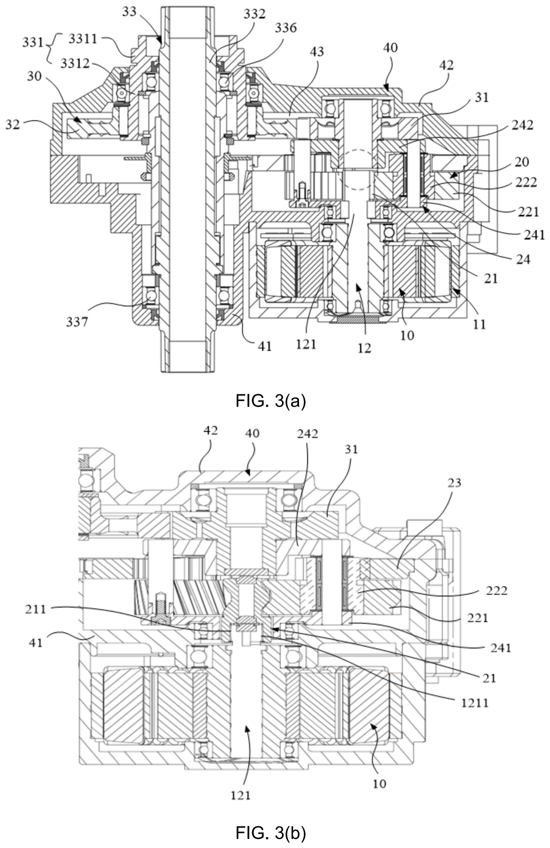

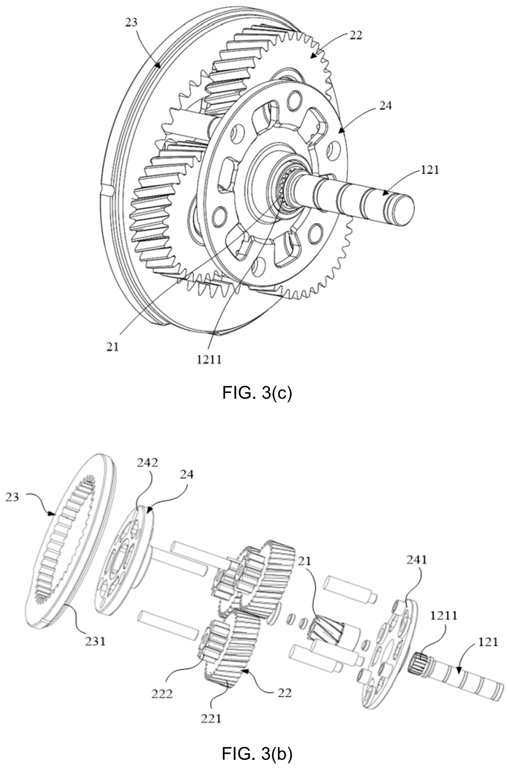

In some embodiments, the driving mechanism 10 includes a fixed part and a rotating part, where the rotating part can rotate relative to the fixed part. The sun gear 21 is drivingly connected to the rotating part. When the rotating part rotates, it provides the initial power for the transmission mechanism 20 and the output mechanism 30. In some implementations, the fixed part includes a stator, and the rotating part includes a rotor. Please refer to FIG. 3(a). As an example, the driving mechanism 10 includes a stator 11 and a rotor 12, where the rotor 12 is rotatably connected to the stator 11 and drivingly connected to the sun gear 21. When the power-assisted bicycle moves forward, the rotor 12 rotates relative to the stator 11 and drives the sun gear 21 to rotate. The sun gear 21, in turn, drives the planetary gear structure 22 to rotate, which then drives the first transmission component 31 to rotate. The first transmission component 31 transmits the power delivered by the driving mechanism 10 to the transmission mechanism 20 and further to other components of the output mechanism 30 (such as the second transmission component 32 or the output part 33 in the following embodiments), thereby assisting the power-assisted bicycle equipped with the mid-mounted motor 100 in moving forward.

With reference to FIG. 3(a), as an example, the rotor 12 includes a motor output shaft 121, which is drivingly connected to the sun gear 21.

In some embodiments, the connection between the motor output shaft 121 and the sun gear 21 includes at least one of the following: interference fit, spline connection, etc., so that the sun gear 21 rotates synchronously with the motor output shaft 121. Please refer to FIG. 3(b) to FIG. 3(d). As an example, the motor output shaft 121 includes a spline shaft 1211, and the sun gear 21 is provided with a through hole 211 for the motor output shaft 121 to pass through. The inner wall of the through hole 211 is equipped with internal splines that mesh with the external splines of the spline shaft 1211. The sun gear 21 is fixedly connected to the motor output shaft 121's spline shaft 1211 through the through hole 211, allowing the sun gear 21 to rotate synchronously with the motor output shaft 121. It can be understood that, by using a spline connection between the motor output shaft 121 and the sun gear 21, the basic component of the planetary drive, the sun gear 21, does not require radial positioning support. This setup allows for automatic adjustment when the load distribution between the planetary gears is uneven. Due to the small size, light weight, and simple structure of the sun gear 21, it is flexible and particularly effective when the number of planetary gears equals 3. In medium and low-speed planetary gear transmissions, it provides excellent load distribution performance.

With reference to FIG. 3(b) to FIG. 3(d), in some embodiments, the motor output shaft 121 and the sun gear 21 are connected via a drum-shaped spline. This design helps to reduce over-constraining, minimize interference and radial offset, and allows appropriate torque transmission between eccentric components, offering the advantages of greater flexibility, smoother operation, and longer lifespan.

In some embodiments, the rotor 12 includes a motor output shaft 121, which is integrally formed with the sun gear 21. In this way, while ensuring that the sun gear 21 can rotate synchronously with the motor output shaft 121, the number of components is reduced, thereby decreasing the assembly steps and improving the assembly efficiency of the mid-mounted motor 100.

It can be understood that the driving mechanism 10 can be designed as an inner rotor motor or an outer rotor motor, etc., according to actual needs.

With reference to FIG. 3(a), in some embodiments, the mid-mounted motor 100 further includes a casing 40, with the transmission mechanism 20 and at least part of the output mechanism 30 being arranged inside the casing 40. The casing 40 can provide protection for the transmission mechanism 20 and the output mechanism 30, such as dustproof and/or liquid-proof functions. It can also prevent at least one of the transmission mechanism 20 and the output mechanism 30 from interfering or colliding with external objects, thereby avoiding damage to external objects (such as people) or to the mid-mounted motor 100.

With reference to FIG. 3(a), exemplarily, the casing 40 includes a first casing 41 and a second casing 42. The first casing 41 is connected to and cooperates with the second casing 42 to form an accommodation chamber 43, in which the transmission mechanism 20 and at least part of the output mechanism 30 are arranged. The first casing 41 and the second casing 42 can be mechanically connected by at least one of the following connection methods: snap-fit connection, magnetic connection, adhesive bonding, quick-release components (such as screws), etc. Exemplarily, the driving mechanism 10 is connected to either the first casing 41 or the second casing 42.

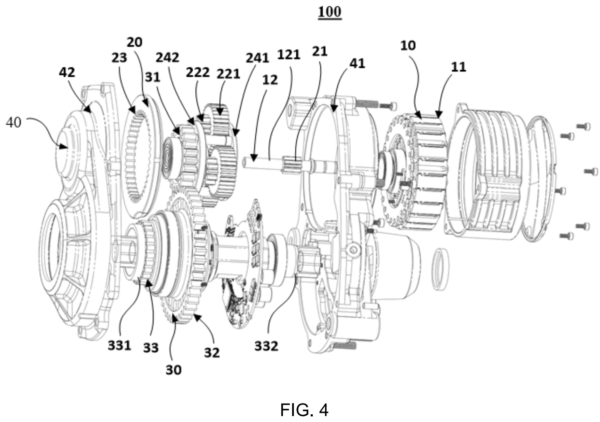

With reference to FIG. 3(a) and 4, in some embodiments, the output mechanism 30 further includes a second transmission component 32 and an output assembly 33. The second transmission component 32 is drivingly connected to the first transmission component 31. The output assembly 33 is drivingly connected to the second transmission component 32. The output assembly 33 is used for driving connection with the sprocket assembly 201 and the crank 203 of the power-assisted bicycle. The second transmission component 32 can further increase the transmission ratio of the mid-mounted motor 100.

It can be understood that the first transmission component 31 transmits the power delivered by the driving mechanism 10 to the transmission mechanism 20 to other components of the output mechanism 30 through a gear meshing transmission mode.

With reference to FIG. 4, in some embodiments, both the first transmission component 31 and the second transmission component 32 are transmission gears, and the first transmission component 31 meshes with the second transmission component 32. Compared with a belt-driven transmission scheme, the gear meshing transmission between the first transmission component 31 and the second transmission component 32 can reduce the volume and weight of the mid-mounted motor 100 while maintaining its transmission ratio unchanged. Additionally, it is less prone to wear, has strong impact resistance, and improves the reliability of the mid-mounted motor 100.

With reference to FIG. 3(a), in some embodiments, the rotational axis of the first transmission component 31 is spaced apart from and parallel to the rotational axis of the second transmission component 32. In this way, the rotational axes of the first transmission component 31 and the second transmission component 32 are neither collinear nor coincident, allowing the axial length of the mid-mounted motor 100 to be reduced. That is, while maintaining the transmission ratio of the mid-mounted motor 100 unchanged, this configuration effectively compresses and reduces the axial dimension of the mid-mounted motor 100. Consequently, it effectively addresses the issue where the transmission ratio of a mid-mounted motor 100 with a planetary gear transmission mechanism 20 is constrained due to axial size or space limitations, further reducing the overall volume and weight of the mid-mounted motor 100.

With reference to FIG. 3(a), exemplarily, the first transmission component 31 meshes with the second transmission component 32, and the rotational axis of the first transmission component 31 is spaced apart from and parallel to the rotational axis of the second transmission component 32. Compared with a three-stage parallel-axis motor-assisted unit (which has three rotational axes arranged in a triangular configuration, resulting in a relatively irregular volume and shape that makes it difficult to fully utilize space), the mid-mounted motor 100 of this embodiment includes at least two rotational axes, which are arranged in the same plane. This results in a more regular external shape, making it easier to integrate into the body 200 of the power-assisted bicycle, achieving higher compatibility. Exemplarily, the mid-mounted motor 100 has two parallel and spaced-apart rotational axes.

With reference to FIG. 3(a), in some embodiments, the rotational axis of the first transmission component 31 is collinear with the motor output shaft 121 of the driving mechanism 10. In this way, the radial dimension of the mid-mounted motor 100 (the dimension perpendicular to the motor output shaft 121) can be reduced. While maintaining the transmission ratio of the mid-mounted motor 100 unchanged, this configuration achieves the goal of compressing and reducing the radial dimension of the mid-mounted motor 100. Consequently, it effectively addresses the issue where the transmission ratio of a mid-mounted motor 100 with a planetary gear transmission mechanism 20 is constrained due to radial length or space limitations, further reducing the overall volume and weight of the mid-mounted motor 100 and enhancing reliability. In some embodiments, the rotational axis of the first transmission component 31 is not collinear with the motor output shaft 121 of the driving mechanism 10. For example, the rotational axis of the first transmission component 31 is spaced apart from and parallel to the straight line on which the motor output shaft 121 is located. The rotational axis of the first transmission component 31 is also spaced apart from and parallel to the rotational axis of the second transmission component 32. Additionally, the rotational axis of the first transmission component 31, the rotational axis of the second transmission component 32, and the motor output shaft 121 are arranged in the same plane.

With reference to FIG. 4, in some embodiments, the diameter of the first transmission component 31 is smaller than the diameter of the second transmission component 32. In this way, a speed reduction transmission between the first transmission component 31 and the second transmission component 32 can be achieved.

In some embodiments, the diameter of the first transmission component 31 is larger than the diameter of the second transmission component 32. In this way, a speed-increasing transmission between the first transmission component 31 and the second transmission component 32 can be achieved.

With reference to FIG. 3(a), in some embodiments, the output assembly 33 includes an output part 331 and a crank shaft 332. The output part 331 is drivingly connected to the second transmission component 32 and is used for driving connection with the sprocket assembly 201 of the power-assisted bicycle (please refer to FIG. 13). The crank shaft 332 is drivingly connected to the output part 331 and is used for driving connection with the crank 203 of the power-assisted bicycle (please refer to FIG. 13). It can be understood that the output part 331 can be connected to the wheel 202 (please refer to FIG. 13) through the sprocket assembly 201, thereby transmitting the assistive power provided by the mid-mounted motor 100 to the wheel 202 to provide an assistive effect. The crank shaft 332 is connected at both ends to the crank 203, which in turn is connected to the pedal 204 (please refer to FIG. 13). A rider can rotate the crank shaft 332 by pedaling the pedal 204, thereby applying pedaling force to the output part 331 to drive the power-assisted bicycle forward.

With reference to FIG. 3(a), in some embodiments, the output part 331 includes an exposed part 3311, which is exposed outside the casing 40, and a non-exposed part 3312, which is arranged inside the casing 40. The exposed part 3311 is connected to the non-exposed part 3312. The non-exposed part 3312 is drivingly connected to the second transmission component 32, while the exposed part 3311 is used for driving connection with the sprocket assembly 201. Exemplarily, the exposed part 3311 and the non-exposed part 3312 are integrally formed.

With reference to FIG. 3(a), exemplarily, the motor output shaft 121 passes through the first casing 41, and the output part 331 passes through the second casing 42. The portion of the output part 331 that is exposed outside the second casing 42 is the exposed part 3311.

In some embodiments, the exposed part 3311 of the output part 331 and the stator 11 of the driving mechanism 10 are positioned on the same side of the first transmission component 31. Exemplarily, the projection of the exposed part 3311 on the straight line where the motor output shaft 121 is located and the stator 11 are positioned on the same side of the first transmission component 31.

With reference to FIG. 3(a), in some embodiments, the exposed part 3311 of the output part 331 and the stator 11 of the driving mechanism 10 are positioned on different sides of the first transmission component 31. Exemplarily, the projection of the exposed part 3311 on the straight line where the motor output shaft 121 is located and the stator 11 are positioned on different sides of the first transmission component 31. For example, the projection of the exposed part 3311 on the straight line where the motor output shaft 121 is located and the stator 11 are positioned on opposite sides of the first transmission component 31.

With reference to FIG. 1, in some embodiments, the output assembly 33 further includes a control unit (not labeled) and a detection element 333. The control unit is signal-connected to the driving mechanism 10. The detection element 333 is arranged on the crank shaft 332 and is used to detect the torque information of the crank shaft 332 and feed it back to the control unit so that the control unit can control the operation of the driving mechanism 10 based on the torque information. In this way, the mid-mounted motor 100 can automatically control the operation of the driving mechanism 10, thereby automatically assisting the power-assisted bicycle, making control simple and convenient. Exemplarily, the detection element 333 includes a torque sensor or the like. The control unit may include a circuit board or a control circuit, among other components.

With reference to FIG. 1, in some embodiments, the output assembly 33 further includes a first clutch 334 and a second clutch 335. The first clutch 334 is arranged between the crank shaft 332 and the output part 331. The second clutch 335 is arranged between the second transmission component 32 and the output part 331.

It can be understood that when a rider pedals the pedal 204, causing the crank shaft 332 to rotate in a first direction to move the power-assisted bicycle forward, the crank shaft 332 is drivingly connected to the output part 331 through the first clutch 334. When the power-assisted bicycle moves backward or the rider pedals the pedal 204, causing the crank shaft 332 to rotate in a second direction opposite to the first direction, the first clutch 334 disengages.

Exemplarily, when the rotor 12 of the driving mechanism 10 rotates in the first rotational direction, the second clutch 335 is in the engaged state, and the second transmission component 32 is drivingly connected to the output part 331 through the second clutch 335, thereby providing assistance to the power-assisted bicycle. When the rotor 12 of the driving mechanism 10 rotates in the second rotational direction opposite to the first rotational direction, the second clutch 335 is in the disengaged state, and the second transmission component 32 is disconnected from the output part 331.

Exemplarily, the torque information of the crank shaft 332 includes torque variation signals. The detection element 333 senses in real-time or at intervals the torque variation signals generated by the rider pedaling the pedal 204 and then feeds these torque variation signals to the control unit. Upon receiving the torque variation signals, the control unit generates an assist control signal to adjust the operation of the driving mechanism 10 in real-time or at intervals, thereby changing the rotational speed of the motor output shaft 121. Consequently, the rotational speeds of the transmission mechanism 20, the first transmission component 31, the second transmission component 32, and the output part 331 also change. In this way, the mid-mounted motor 100 can provide an appropriate level of assistance to the output part 331 and the sprocket assembly 201 connected to it in real-time or at intervals based on the rider's pedaling force.

With reference to FIG. 3(a), in some embodiments, the output assembly 33 further includes a ninth bearing 336. The ninth bearing 336 is arranged between the crank shaft 332 and the output part 331 and is mounted around the crank shaft 332. The ninth bearing 336 can provide axial limiting for the crank shaft 332, reducing or preventing axial movement during the transmission process.

With reference to FIG. 3(a), in some embodiments, the output assembly 33 further includes a tenth bearing 337. The tenth bearing 337 is arranged between the crank shaft 332 and the casing 40 and is mounted around the crank shaft 332. The tenth bearing 337 can further provide axial limiting for the crank shaft 332, reducing or preventing axial movement during the transmission process. Exemplarily, the ninth bearing 336 and the tenth bearing 337 are arranged axially spaced along the crank shaft 332. Their cooperation can provide effective axial limiting for the crank shaft 332, further reducing or preventing axial movement during the transmission process.

With reference to FIG. 2, in some embodiments, the transmission mechanism 20 further includes a planetary carrier 24, and the motor output shaft 121 passes through at least a portion of the planetary carrier 24. Please refer to FIG. 3(a). It can be understood that the motor output shaft 121 passes through at least a portion of the planetary carrier 24 at the end farthest from the stator 11. The axial length of the motor output shaft 121 is appropriately extended to facilitate testing of the driving mechanism 10 before it is installed in the casing 40.

Exemplarily, the planetary gear structure 22 is arranged on the planetary carrier 24. Exemplarily, the planetary gear structure 22 is able to rotate relative to the planetary carrier 24.

With reference to FIG. 1, in some embodiments, the motor output shaft 121 passes through both the planetary carrier 24 and the first transmission component 31. In this way, the motor output shaft 121 passes through both the planetary carrier 24 and the first transmission component 31 at the end farthest from the stator 11, and the axial length of the motor output shaft 121 is further appropriately extended, further facilitating testing of the driving mechanism 10 before it is installed in the casing 40.

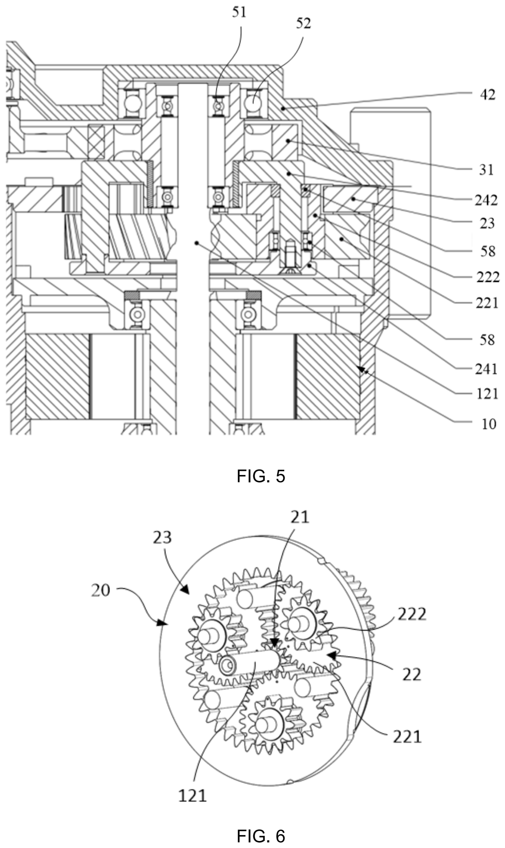

With reference to FIG. 5, in some embodiments, a first bearing 51 is arranged between the motor output shaft 121 and the first transmission component 31, with the first bearing 51 mounted around the motor output shaft 121. In this way, the first bearing 51 can, on one hand, increase the strength of the output mechanism 30 or the first transmission component 31, making the transmission more stable; on the other hand, it can provide axial limiting for the motor output shaft 121, reducing or preventing axial movement during the transmission process. In other embodiments, the first bearing 51 can also be omitted, and the motor output shaft 121 may be radially clearance-fitted with the first transmission component 31.

With reference to FIG. 5, in some embodiments, a second bearing 52 is arranged between the first transmission component 31 and the second casing 42. The second bearing 52 can increase the strength of the output mechanism 30 or the first transmission component 31, making the transmission more stable. In other embodiments, the second bearing 52 can also be omitted, and the first transmission component 31 may be clearance-fitted with the second casing 42.

With reference to FIG. 1 and 4, in some embodiments, at least a portion of the ring gear structure 23 is fixedly connected to the casing 40, and the planetary carrier 24 can rotate relative to the casing 40. The first transmission component 31 is fixedly connected to the planetary carrier 24. Exemplarily, when the power-assisted bicycle needs assistance to move forward, the driving mechanism 10 is powered on. The stator 11 of the driving mechanism 10 remains stationary, and the rotor 12 of the driving mechanism 10 rotates relative to the stator 11, driving the sun gear 21 to rotate. The sun gear 21 engages with the planetary gear structure 22, causing the sun gear 21 to drive the planetary gear structure 22 to rotate. The planetary gear structure 22 engages with at least a portion of the ring gear structure 23. Since at least a portion of the ring gear structure 23 is fixedly connected to the casing 40, the planetary carrier 24 rotates. The first transmission component 31 mounted on the planetary carrier 24 rotates along with the planetary carrier 24, and the first transmission component 31 transmits power to the second transmission component 32, causing the second transmission component 32 to drive the output part 331 to rotate. Ultimately, the power-assisted bicycle equipped with the mid-mounted motor 100 is assisted to move forward. At this time, the first clutch 334 and the second clutch 335 are in an engaged state or operational state.

In some embodiments, the planetary carrier 24 is fixedly connected to the casing 40, and at least a portion of the ring gear structure 23 can rotate relative to the casing 40. The first transmission component 31 is in power transmission connection with the ring gear structure 23. Exemplarily, when the power-assisted bicycle needs assistance to move forward, the driving mechanism 10 is powered on. The stator 11 of the driving mechanism 10 remains stationary, and the rotor 12 of the driving mechanism 10 rotates relative to the stator 11, driving the sun gear 21 to rotate. The sun gear 21 engages with the planetary gear structure 22, causing the sun gear 21 to drive the planetary gear structure 22 to rotate. The planetary gear structure 22 engages with at least a portion of the ring gear structure 23. Since the planetary carrier 24 is fixedly connected to the casing 40, the planetary gear structure 22 drives at least a portion of the ring gear structure 23 to rotate, which in turn drives the first transmission component 31 connected to the ring gear structure 23 to rotate. The first transmission component 31 transmits power to the second transmission component 32, causing the second transmission component 32 to drive the output part 331 to rotate. Ultimately, the power-assisted bicycle equipped with the mid-mounted motor 100 is assisted to move forward. At this time, the first clutch 334 and the second clutch 335 are in an engaged state or operational state.

In some embodiments, a gear structure (not shown in the figure) is also arranged on the ring gear structure 23, and the gear structure is in power transmission connection with the first transmission component 31. In other embodiments, the gear structure may be omitted, and the first transmission component 31 may be directly arranged on at least a portion of the ring gear structure 23.

In some embodiments, the planetary carrier 24 can be an integrally molded planetary carrier 24, thus simplifying the structure and improving assembly efficiency.

With reference to FIG. 1, 6 and 7, in some embodiments, the planetary carrier 24 includes a first planetary carrier 241 and a second planetary carrier 242. The first planetary carrier 241 is arranged inside the casing 40, and the motor output shaft 121 passes through the first planetary carrier 241. The second planetary carrier 242 is arranged inside the casing 40, and the second planetary carrier 242 is connected to the first planetary carrier 241. The planetary gear structure 22 is rotationally connected to the second planetary carrier 242.

In some embodiments, the first planetary carrier 241 and the second planetary carrier 242 can be mechanically connected by at least one of the following methods: snap-fit connection, plug-in, magnetic connection, adhesive connection, quick-release components (such as screws) connection, etc. In other embodiments, the first planetary carrier 241 can also be integrally molded with the second planetary carrier 242.

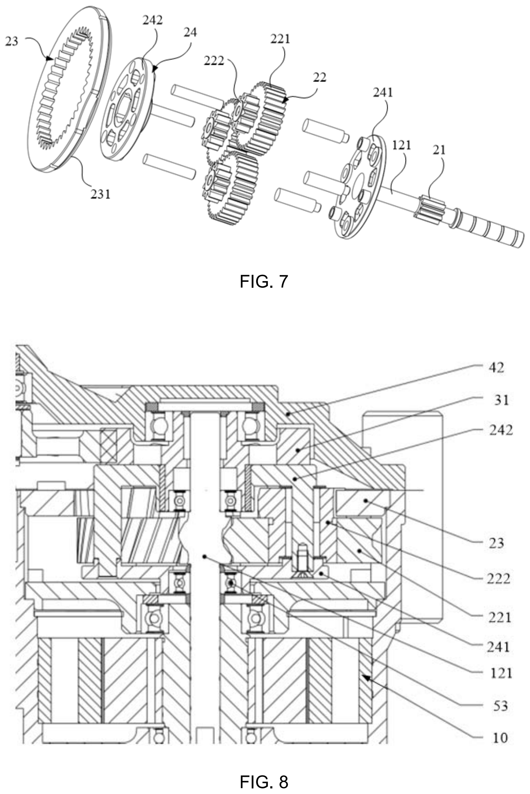

With reference to FIG. 8, in some embodiments, the first planetary carrier 241 and the rotor 12 (or motor output shaft 121) are provided with a third bearing 53, with the third bearing 53 fitted around the rotor 12 (or motor output shaft 121). This third bearing 53 can enhance the strength of the transmission mechanism 20, making the transmission more stable, and can provide axial limitation for the rotor 12 (or motor output shaft 121), reducing or preventing axial shifting during transmission. In other embodiments, the third bearing 53 may be omitted, and the rotor 12 of the driving mechanism 10 may pass through the first planetary carrier 241, with the first planetary carrier 241 and the rotor 12 fitting with a radial clearance.

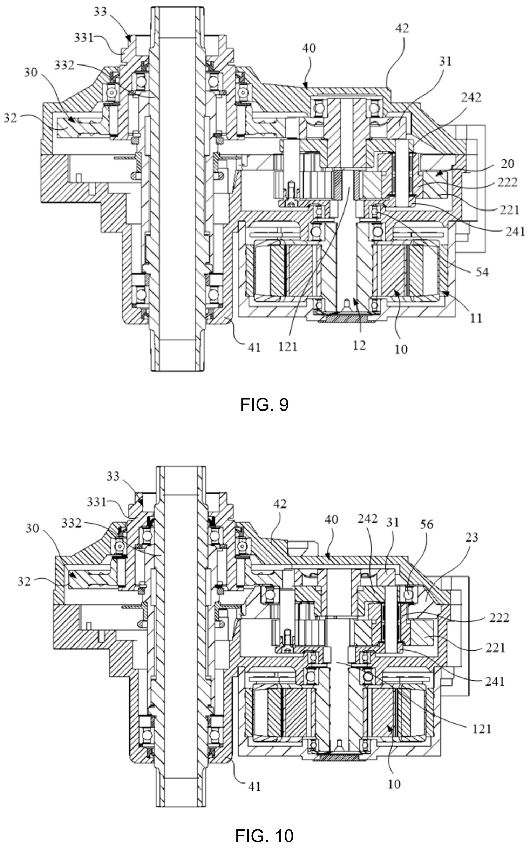

With reference to FIG. 9, in some embodiments, a fourth bearing 54 is provided between the first planetary carrier 241 and the first casing 41. The fourth bearing 54 can improve the strength of the transmission mechanism 20, making the transmission more stable.

In some embodiments, a fifth bearing (not shown in the figure) is provided between the second planetary carrier 242 and the rotor 12, with the fifth bearing being sleeved over the outer side of the rotor 12. The fifth bearing enhances the strength of the transmission mechanism 20, making the transmission more stable, and it can also provide axial limitation for the rotor 12, reducing or preventing axial displacement during the transmission process. In other embodiments, the fifth bearing may be omitted, and the rotor 12 of the driving mechanism 10 is passed through the second planetary carrier 242, with a radial clearance fit between the second planetary carrier 242 and the rotor 12.

With reference to FIG. 10, in some embodiments, a sixth bearing 56 is provided between the second planetary carrier 242 and the ring gear structure 23, thereby enhancing the strength of the transmission mechanism 20 and making the transmission more stable. In some embodiments, a seventh bearing (not shown in the figure) is provided between the second planetary carrier 242 and the second casing 42, thus enhancing the strength of the transmission mechanism 20 and making the transmission more stable.

With reference to FIG. 3(a), in some embodiments, the motor output shaft 121, at the end away from the stator 11, is spaced apart from the second planetary carrier 242 to reduce the weight of the mid-mounted motor 100.

With reference to FIG. 3(a), in some embodiments, the motor output shaft 121, at the end away from the stator 11, is spaced apart from the first transmission component 31 to reduce the weight of the mid-mounted motor 100.

In some embodiments, an elastic cushioning component (not shown in the figure) is provided between the ring gear structure 23 and the casing 40. The elastic cushioning component serves a buffering function, effectively absorbing gear meshing impacts caused by manufacturing errors, assembly errors, or the transmission process, thereby reducing vibrations and noise and making the transmission mechanism 20 operate more smoothly. By way of example, the elastic cushioning component may include at least one of soft rubber plugs, foam, or the like.

With reference to FIG. 4 and 7, in some embodiments, the planetary gear structure 22 includes a first planetary gear 221 and a second planetary gear 222. The first planetary gear 221 engages with the sun gear 21. The second planetary gear 222 engages with at least part of the ring gear structure 23, and the second planetary gear 222 is fixedly connected to the first planetary gear 221. The first planetary gear 221 is connected to the planetary carrier 24. The planetary gear structure 22, including the first planetary gear 221 and the second planetary gear 222, can further improve the transmission ratio of the mid-mounted motor 100.

Exemplarily, the first planetary gear 221 is connected to the planetary carrier 24 by at least one of the following means: interference fit, snap-fit connection, plug-in connection, etc.

Exemplarily, both the first planetary gear 221 and the second planetary gear 222 are rotatably connected to the planetary carrier 24.

Exemplarily, the first planetary gear 221 and the second planetary gear 222 cooperate to form a dual planetary gear. In this way, at the same transmission ratio, the mid-mounted motor 100 with the dual planetary gear has a smaller volume and weight.

Exemplarily, the transmission ratio of the transmission mechanism 20 ranges from 7 to 20 (inclusive of 7 and 20), and the transmission ratio of the first transmission component 31 and the second transmission component 32 ranges from 1 to 6 (inclusive of 1 and 6). For example, when the transmission ratio of the transmission mechanism 20 is 15, the transmission ratio of the first transmission component 31 and the second transmission component 32 is 2.14.

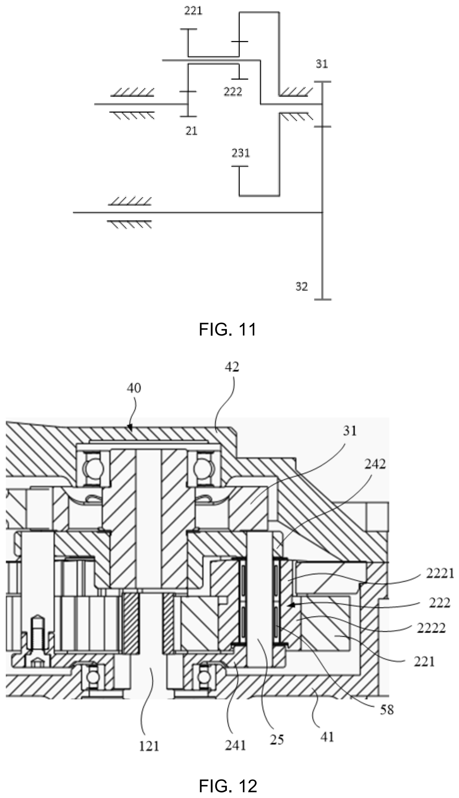

With reference to FIG. 11 in conjunction with FIG. 3(a), exemplarily, when the power-assisted bicycle requires assistance while moving forward, the stator 11 of the driving mechanism 10 remains fixed, while the rotor 12 of the driving mechanism 10 can rotate relative to the stator 11, thereby driving the sun gear 21 to rotate. The sun gear 21 engages with the first planetary gear 221, causing the sun gear 21 to drive the rotation of the first planetary gear 221 and the second planetary gear 222. The second planetary gear 222 engages with the ring gear 231 of the ring gear structure 23 (please refer to FIG. 7). Since the ring gear 231 is fixed to the casing 40, the planetary carrier 24 can rotate relative to the casing 40. The first transmission component 31, which is disposed on the planetary carrier 24, follows the planetary carrier 24 in rotation. The first transmission component 31 transmits power to the second transmission component 32, which in turn transmits power to the output part 331, ultimately assisting the power-assisted bicycle equipped with the mid-mounted motor 100 in moving forward.

With reference to FIG. 7, in some embodiments, the diameter of the first planetary gear 221 is greater than the diameter of the second planetary gear 222.

In some embodiments, the diameter of the first planetary gear 221 may be designed to be smaller than the diameter of the second planetary gear 222 based on actual requirements.

Exemplarily, the number of first planetary gears 221 and the number of second planetary gears 222 can be designed according to actual needs. For example, the number of first planetary gears 221 and the number of second planetary gears 222 are both at least two, and the number of first planetary gears 221 corresponds to the number of second planetary gears 222. Exemplarily, the number of first planetary gears 221 is the same as the number of second planetary gears 222.

Exemplarily, at least two first planetary gears 221 (or at least two second planetary gears 222) are arranged at circumferential intervals along the planetary carrier 24, with each first planetary gear 221 corresponding to a second planetary gear 222. In this way, a larger transmission ratio can be designed within an effective space. Exemplarily, at least two first planetary gears 221 are arranged at equal circumferential intervals along the planetary carrier 24. With reference to FIG. 6, exemplarily, the number of first planetary gears 221 is three, with each first planetary gear 221 corresponding to a second planetary gear 222.

In some embodiments, the first planetary gear 221 is a helical gear, while the second planetary gear 222 is a spur gear. The second planetary gear 222, being a spur gear, engages with the teeth of the ring gear structure 23, which are also spur teeth. This design reduces the machining complexity and cost of the ring gear structure 23. Additionally, compared to configurations where both the first planetary gear 221 and the second planetary gear 222 are either spur gears or helical gears, the combination of a helical first planetary gear 221 and a spur second planetary gear 222 facilitates better assembly of the transmission mechanism 20. This design allows for easier positioning during assembly and enhances operability.

With reference to FIG. 12, in some embodiments, the transmission mechanism 20 further includes a gear connection shaft 25, with both the first planetary gear 221 and the second planetary gear 222 being rotatably connected to the planetary carrier 24 via the gear connection shaft 25. Exemplarily, the gear connection shaft 25 is fixedly connected to the planetary carrier 24. For example, they may be integrally formed or insert-molded together. Alternatively, the gear connection shaft 25 and the planetary carrier 24 may be separately manufactured and then fixedly connected by at least one of the following means: interference fit, snap-fit connection, plug-in connection, etc.

Exemplarily, the gear connection shaft 25 is integrally formed with the second planetary carrier 242. Exemplarily, one end of the gear connection shaft 25 is fixedly connected to the second planetary carrier 242, while the other end is interference-fitted or plugged into the first planetary carrier 241. Exemplarily, one end of the gear connection shaft 25 is interference-fitted or plugged into the second planetary carrier 242, while the other end is interference-fitted or plugged into the first planetary carrier 241.

With reference to FIG. 5 or FIG. 12, in some embodiments, the first planetary gear 221 is connected to the second planetary gear 222, and an eighth bearing 58 is arranged between the second planetary gear 222 and the gear connection shaft 25. The eighth bearing 58 is sleeved onto the gear connection shaft 25. This arrangement reduces or prevents axial movement of the planetary gear structure 22 during the operation of the driving mechanism 10, thereby minimizing unnecessary friction or collisions, which in turn reduces energy loss. Additionally, it helps to lower noise generated during transmission, enhancing the user experience. Exemplarily, the connection between the first planetary gear 221 and the second planetary gear 222 includes at least one of the following methods: plugging, interference fit, etc.

With reference to FIG. 12, in some embodiments, the eighth bearing 58 includes a needle bearing. The needle bearing occupies less space, which helps further reduce the size and weight of the mid-mounted motor 100 while maintaining the same transmission ratio, thereby achieving overall miniaturization and lightweight design.

Exemplarily, the first bearing 51, second bearing 52, third bearing 53, fourth bearing 54, fifth bearing, sixth bearing 56, seventh bearing, eighth bearing 58, ninth bearing 336, and tenth bearing 337 may each include at least one of the following types of bearings: ball bearings, needle bearings, roller bearings, or oil-impregnated bearings.

Exemplarily, the number of the first bearing 51, second bearing 52, third bearing 53, fourth bearing 54, fifth bearing, sixth bearing 56, seventh bearing, eighth bearing 58, ninth bearing 336, and tenth bearing 337 can be designed based on actual requirements. For example, each may be one, two, or more.

When the number of eighth bearings 58 is more than one, the multiple eighth bearings 58 may be of the same type or different types. For instance, if there are two eighth bearings 58, both may be needle bearings. Alternatively, if there are two eighth bearings 58, one may be a needle bearing while the other may be a ball bearing, oil-impregnated bearing, or roller bearing. The same principle applies when the number of the first bearing 51, second bearing 52, third bearing 53, fourth bearing 54, fifth bearing, sixth bearing 56, seventh bearing, ninth bearing 336, and tenth bearing 337 is more than one, and this will not be elaborated further herein.

With reference to FIG. 12, in some embodiments, the second planetary gear 222 includes a protruding part 2221 and a through part 2222 connected to the protruding part 2221. The protruding part 2221 protrudes from the first planetary gear 221. The protruding part 2221 engages with at least a portion of the ring gear structure 23. This design not only enables the connection between the first planetary gear 221 and the second planetary gear 222 but also facilitates the engagement of the second planetary gear 222 with at least a portion of the ring gear structure 23. Exemplarily, the gear connection shaft 25 passes through the protruding part 2221 and the through part 2222, while the through part 2222 passes through the first planetary gear 221. Exemplarily, the through part 2222 is interference-fitted or plugged into the first planetary gear 221. Exemplarily, the protruding part 2221 and the through part 2222 are integrally formed.

With reference to FIG. 3(a) and 12, in some embodiments, the protruding part 2221 of the second planetary gear 222 and the stator 11 of the driving mechanism 10 are positioned on different sides of the first planetary gear 221. Exemplarily, the protruding part 2221 and the stator 11 of the driving mechanism 10 are positioned on opposite sides of the first planetary gear 221.

With reference to FIG. 3(a) and 12, in some embodiments, the output part 331 includes an exposed part 3311 that is exposed outside the casing 40. The exposed part 3311 and the protruding part 2221 are located on the same side of the first planetary gear 221. Exemplarily, the projection of the exposed part 3311 along the straight line where the gear connection shaft 25 is located and the protruding part 2221 are on the same side of the first planetary gear 221. Exemplarily, at least a portion of the ring gear structure 23 and the protruding part 2221 are on the same side of the first planetary gear 221. Exemplarily, the second planetary carrier 242, at least a portion of the ring gear structure 23, and the protruding part 2221 are on the same side of the first planetary gear 221.

It can be understood that the first planetary gear 221 has an opposite first surface and second surface along the motor output shaft 121, with the first surface being closer to the stator 11 of the driving mechanism 10. In some embodiments, the protruding part 2221 and the stator 11 of the driving mechanism 10 are on the same side of the first planetary gear 221. This design effectively utilizes the axial spacing between the first surface of the first planetary gear 221 and the casing 40 along the motor output shaft 121, making the structure of the mid-mounted motor 100 more compact and further reducing the size of the mid-mounted motor 100.\

In some embodiments, the exposed part 3311 of the output part 331 and the protruding part 2221 are on different sides of the first planetary gear 221. Exemplarily, the projection of the exposed part 3311 along the straight line where the gear connection shaft 25 is located and the protruding part 2221 are on different sides of the first planetary gear 221. For example, the projection of the exposed part 3311 along the straight line where the gear connection shaft 25 is located and the protruding part 2221 are on opposite sides of the first planetary gear 221.

With reference to FIG. 7, in some embodiments, the ring gear structure 23 includes a ring gear 231, which meshes with the second planetary gear 222. Exemplarily, the ring gear 231 is a single unit, resulting in a compact structure with reduced volume and weight for the transmission mechanism 20, thereby facilitating the miniaturization and lightweight design of the mid-mounted motor 100.

Exemplarily, the transmission mechanism 20 includes an NW planetary gear transmission mechanism.

In some embodiments, the ring gear structure 23 includes a first ring gear (not shown) and a second ring gear (not shown). The first ring gear is fixedly connected to the casing 40, while the second ring gear can rotate relative to the casing 40. One of the first planetary gear 221 and the second planetary gear 222 engages with the first ring gear, while the other engages with the second ring gear. It can be understood that the second ring gear serves as the torque transmission output part of the transmission mechanism 20, transferring the torque transmitted by the planetary gear structure 22 to the first transmission component 31.

Exemplarily, the transmission mechanism 20 includes an NGWN planetary gear transmission mechanism.

With reference to FIG. 13, some embodiments of this application also provide a power-assisted bicycle, including a body 200 and the mid-mounted motor 100 of any of the embodiments described above, with the mid-mounted motor 100 being connected to the body 200. The power-assisted bicycle may include an electric-assisted bicycle, etc.

With reference to FIG. 13, exemplarily, the body 200 includes a sprocket assembly 201, a wheel 202, pedals 204, and a crank 203. The mid-mounted motor 100 is connected to the sprocket assembly 201 and the crank 203. The mid-mounted motor 100 is capable of providing assistance to the power-assisted bicycle during riding, thereby saving the rider's pedaling effort. Exemplarily, the output part 331 of the mid-mounted motor 100 can be connected to the wheel 202 through the sprocket assembly 201, transferring the assistance provided by the mid-mounted motor 100 to the wheel 202, thereby providing the assistive effect. Both ends of the crankshaft 332 are connected to the crank 203, and the crank 203 is connected to the pedal 204. The rider can rotate the crankshaft 332 by pedaling the pedal 204, thereby applying pedaling force to the output part 331 and driving the power-assisted bicycle's movement. It can be understood that, during the riding of the power-assisted bicycle, the rider can provide pedaling force through the pedal 204 to drive the power-assisted bicycle's movement, and can also provide assistance through the mid-mounted motor 100 to aid in driving the power-assisted bicycle's movement.

With reference to FIG. 13, exemplarily, the sprocket assembly 201 includes a sprocket transmission structure 2011 and a chain 2012 that is drive-connected to the sprocket transmission structure 2011. A portion of the sprocket transmission structure 2011 is drive-connected to the output part 331, while another portion of the sprocket transmission structure 2011 is drive-connected to the wheel 202.

Exemplarily, when the power-assisted bicycle requires assistance for forward movement, the driving mechanism 10 is powered on. The stator 11 of the driving mechanism 10 remains stationary, while the rotor 12 of the driving mechanism 10 rotates relative to the stator 11, thereby driving the sun gear 21 to rotate. The sun gear 21 meshes with the first planetary gear 221, causing the sun gear 21 to drive the first planetary gear 221 and the second planetary gear 222 to rotate. The second planetary gear 222 meshes with at least a portion of the ring gear structure 23. Since at least a portion of the ring gear structure 23 is fixed to the casing 40, the planetary carrier 24 rotates relative to the casing 40. The first transmission component 31, located on the planetary carrier 24, follows the rotation of the planetary carrier 24. The first transmission component 31 drives the second transmission component 32, which in turn drives the output part 331. As a result, the power-assisted bicycle equipped with the mid-mounted motor 100 moves forward. At this time, the first clutch 334 and the second clutch 335 are in a meshing or working state.

Exemplarily, when the power-assisted bicycle is gliding forward (i.e., no assistance from the mid-mounted motor 100 is required, such as when the power-assisted bicycle is going downhill or moving forward due to inertia), the wheels of the power-assisted bicycle glide forward, and the sprocket assembly 201 drives the output part 331 to rotate. At this time, the second clutch 335 is in a disengaged state. This ensures that the power-assisted bicycle can glide smoothly while protecting the driving mechanism 10, transmission mechanism 20, first transmission component 31, and second transmission component 32.

In the description of this application, it should be noted that, unless explicitly stated otherwise, the terms "mount," "connect," "couple," "mechanically coupled," and "coupled" should be broadly interpreted. For example, they can refer to either a fixed connection or a detachable connection, or an integrated connection. They can refer to a mechanical connection or an electrical connection. They can refer to a direct connection or an indirect connection through an intermediary, and may refer to internal communication within two components or their mutual interaction. The mechanical coupling or coupling of two components includes both direct coupling and indirect coupling, such as fixed connections or connections through a transmission mechanism. For a person skilled in the art, the specific meaning of these terms in this application can be understood based on the specific context.

In this application, unless explicitly stated otherwise, the term "above" or "below" in relation to the first feature and the second feature can include the first and second features being in direct contact, or it can include a scenario where the first and second features are not in direct contact but are in contact through another feature between them. Furthermore, the terms "above," "upper," and "on top of" when referring to the first feature relative to the second feature include situations where the first feature is directly above or obliquely above the second feature, or simply indicate that the first feature has a higher horizontal level than the second feature. Similarly, the terms "below," "lower," and "underneath" when referring to the first feature relative to the second feature include situations where the first feature is directly below or obliquely below the second feature, or simply indicate that the first feature has a lower horizontal level than the second feature.

The above disclosure provides many different embodiments or examples for implementing the various structures of this application. To simplify the disclosure of this application, certain parts and configurations of specific examples have been described. Of course, these are merely examples and are not intended to limit the application. Furthermore, this application may refer to numbers and/or reference letters repeatedly in different examples, and such repetition is for simplification and clarity purposes only and does not indicate any relationship between the different embodiments and/or configurations discussed. Additionally, this application provides various specific examples of processes and materials, but a person skilled in the art will recognize that other processes and/or materials may be applied.

In the description of this specification, references to terms such as "one embodiment," "some embodiments," "illustrative embodiment," "example," "specific example," or "some examples" mean that the specific methods, steps, features, structures, materials, or characteristics described in connection with the embodiment or example are included in at least one embodiment or example of this application. In this specification, the illustrative expressions of the aforementioned terms do not necessarily refer to the same embodiment or example. Furthermore, the specific methods, steps, features, structures, materials, or characteristics described can be combined in any suitable way in one or more embodiments or examples.

The above description is merely a specific embodiment of this application, and the scope of protection of this application is not limited to this. Any person skilled in the art, within the technical scope disclosed by this application, may easily conceive of various equivalent modifications or substitutions, and such modifications or substitutions should be covered within the scope of protection of this application. Therefore, the scope of protection of this application should be determined by the scope of the claims.

## Claims

1. A mid-mounted motor, **characterized by** comprising:
a driving mechanism;
a transmission mechanism, comprising a sun gear, a planetary gear structure, and a ring gear structure, wherein the sun gear is connected in transmission with the driving mechanism, the sun gear engages with the planetary gear structure, and the planetary gear structure engages with at least a portion of the ring gear structure; and
an output mechanism, comprising a first transmission component, wherein the first transmission component is disposed on the transmission mechanism, and the first transmission component transmits, by way of gear meshing transmission, a power transmitted to the transmission mechanism from the driving mechanism to other components.

2. The mid-mounted motor according to claim 1, **characterized in that** the output mechanism further comprises:
a second transmission component, connected in transmission with the first transmission component; and
an output assembly, connected in transmission with the second transmission component.

3. The mid-mounted motor according to claim 2, **characterized in that** the first transmission component and the second transmission component are both transmission gears, and the first transmission component is meshed with the second transmission component.

4. The mid-mounted motor according to claim 2, **characterized in that** a rotation axis of the first transmission component is spaced apart from and parallel to a rotation axis of the second transmission component.

5. The mid-mounted motor according to claim 2, **characterized in that** a rotation axis of the first transmission component is collinear with a motor output shaft of the driving mechanism.

6. The mid-mounted motor according to claim 2, **characterized in that** a diameter of the first transmission component is smaller than a diameter of the second transmission component.

7. The mid-mounted motor according to claim 2, **characterized in that** a diameter of the first transmission component is greater than a diameter of the second transmission component.

8. The mid-mounted motor according to claim 2, **characterized in that** the output assembly comprises:
an output part, connected in transmission with the second transmission component for a connection in transmission with a sprocket assembly of a power-assisted bicycle; and
a crank shaft, connected in transmission with the output part for a connection in transmission with a crank of the power-assisted bicycle.

9. The mid-mounted motor according to claim 8, further comprising a casing, wherein an exposed part of the output part is exposed outside the casing, and the exposed part and a stator of the driving mechanism are arranged on a same side of the first transmission component.

10. The mid-mounted motor according to claim 8, further comprising a casing, wherein an exposed part of the output part is exposed outside the casing, and the exposed part and a stator of the driving mechanism are arranged on different sides of the first transmission component.

11. The mid-mounted motor according to claim 8, **characterized in that** the output assembly further comprises:
a control unit, signal-connected to the driving mechanism; and
a detection element, disposed on the crank shaft, configured to detect torque information of the crank shaft and feedback the torque information to the control unit, so that the control unit controls the driving mechanism to operate based on the torque information.

12. The mid-mounted motor according to claim 8, **characterized in that** the output assembly further comprises:
a first clutch, disposed between the crank shaft and the output part; and
a second clutch, disposed between the second transmission component and the output part.

13. The mid-mounted motor according to claim 12, **characterized in that** the output assembly further comprises a ninth bearing, the ninth bearing is arranged between the crank shaft and the output part, and the ninth bearing is sleeved over the crank shaft; and/or,
the output assembly further comprises a tenth bearing, the tenth bearing is arranged between the crank shaft and the casing of the mid-mounted motor, and the tenth bearing is sleeved over the crank shaft.

14. The mid-mounted motor according to claim 1, **characterized in that** the driving mechanism comprises:
a stator; and
a rotor, rotatably connected to the stator and connected in transmission with the sun gear.

15. The mid-mounted motor according to claim 14, **characterized in that** the rotor comprises a motor output shaft, and the connection between the motor output shaft and the sun gear comprises at least one of an interference connection or a spline connection.

16. The mid-mounted motor according to claim 15, **characterized in that** the motor output shaft is connected to the sun gear through a crowned spline connection.

17. The mid-mounted motor according to claim 14, **characterized in that** the rotor comprises a motor output shaft, and the motor output shaft is integrally formed with the sun gear.

18. The mid-mounted motor according to claim 14, **characterized in that** the transmission mechanism further comprises a planetary carrier, and the rotor comprises a motor output shaft, wherein the motor output shaft passes through at least part of the planetary carrier.

19. The mid-mounted motor according to claim 14, **characterized in that** the transmission mechanism further comprises a planetary carrier, and the rotor comprises a motor output shaft, wherein the motor output shaft passes through the planetary carrier and the first transmission component.

20. The mid-mounted motor according to claim 18, **characterized in that** a first bearing is arranged between the motor output shaft and the first transmission component and the first bearing is sleeved over the motor output shaft; or the motor output shaft is in radial clearance fit with the first transmission component.

21. The mid-mounted motor according to claim 1, further comprising:
a casing; wherein the first transmission component is in a clearance fit with a second casing of the casing; or a second bearing is arranged between the first transmission component and a second casing of the casing.

22. The mid-mounted motor according to claim 1, further comprising:
a casing, wherein the transmission mechanism and at least part of the output mechanism are disposed within the casing.

23. The mid-mounted motor according to claim 22, **characterized in that** the transmission mechanism further comprises a planetary carrier, at least part of the ring gear structure is fixedly connected to the casing, the planetary carrier is configured to rotate relative to the casing, and the first transmission component is fixedly connected to the planetary carrier.

24. The mid-mounted motor according to claim 22, **characterized in that** the transmission mechanism further comprises a planetary carrier, the planetary carrier is fixedly connected to the casing, at least part of the ring gear structure is configured to rotate relative to the casing, and the first transmission component is connected in transmission with the ring gear structure.

25. The mid-mounted motor according to claim 24, **characterized in that** the ring gear structure further comprises a gear structure, and the gear structure is connected in transmission with the first transmission component.

26. The mid-mounted motor according to claim 22, **characterized in that** the transmission mechanism further comprises a planetary carrier and the planetary carrier comprises:
a first planetary carrier, disposed within the casing, and the motor output shaft of the driving mechanism passes through the first planetary carrier; and
a second planetary carrier, disposed within the casing and connected to the first planetary carrier, with the planetary gear structure being rotatably connected to the second planetary carrier.

27. The mid-mounted motor according to claim 26, **characterized in that** a rotor of the driving mechanism passes through the first planetary carrier, and the first planetary carrier is in radial clearance fit with the rotor; or, a third bearing is disposed between the first planetary carrier and a rotor, and the third bearing is sleeved outside the rotor.

28. The mid-mounted motor according to claim 26, **characterized in that** a fourth bearing is disposed between the first planetary carrier and a first casing of the casing.

29. The mid-mounted motor according to claim 26, **characterized in that** a rotor of the driving mechanism passes through the second planetary carrier, and the second planetary carrier is in radial clearance fit with the rotor; or a fifth bearing is disposed between the second planetary carrier and a rotor, and the fifth bearing is sleeved outside of the rotor.

30. The mid-mounted motor according to claim 26, **characterized in that** a sixth bearing is disposed between the second planetary carrier and the ring gear structure; or a seventh bearing is disposed between the second planetary carrier and the second casing of the casing.

31. The mid-mounted motor according to claim 26, **characterized in that** the driving mechanism comprises a stator, an end of the motor output shaft away from the stator is arranged at an interval from the second planetary carrier; and/or an end of the motor output shaft away from the stator is arranged at an interval from the first transmission component.

32. The mid-mounted motor according to claim 22, **characterized in that** an elastic buffer member is arranged between the ring gear structure and the casing.

33. The mid-mounted motor according to any one of claims 1-32, **characterized in that** the planetary gear structure comprises:
a first planetary gear, which meshes with the sun gear;
a second planetary gear, which meshes with at least part of the ring gear structure and is connected to the first planetary gear, wherein
the first planetary gear is connected to the planetary carrier of the transmission mechanism.

34. The mid-mounted motor according to claim 33, **characterized in that** a diameter of the first planetary gear is greater than a diameter of the second planetary gear.

35. The mid-mounted motor according to claim 33, **characterized in that** the first planetary gear is a helical gear, and the second planetary gear is a spur gear.

36. The mid-mounted motor according to claim 33, **characterized in that** the transmission mechanism further comprises:
a gear connection shaft, wherein the first planetary gear and the second planetary gear are both rotatably connected to the planetary carrier through the gear connection shaft.

37. The mid-mounted motor according to claim 36, **characterized in that** the first planetary gear is fixedly connected to the second planetary gear, an eighth bearing is arranged between the second planetary gear and the gear connection shaft, and the eighth bearing is sleeved over the gear connection shaft.

38. The mid-mounted motor according to claim 37, **characterized in that** the eighth bearing comprises a needle roller bearing.

39. The mid-mounted motor according to claim 33, **characterized in that** the second planetary gear comprises a protruding part protrudingly arranged on the first planetary gear, and the protruding part and the stator of the driving mechanism are arranged on different sides of the first planetary gear.

40. The mid-mounted motor according to claim 39, **characterized in that** the output mechanism comprises an output part connected in transmission with the sprocket assembly of the power-assisted bicycle, and the exposed part of the output part that is exposed outside the casing and the protruding part are arranged on a same side of the first planetary gear.

41. The mid-mounted motor according to claim 33, **characterized in that** the second planetary gear comprises a protruding part protrudingly arranged on the first planetary gear, and the protruding part and the stator of the driving mechanism are arranged on a same side of the first planetary gear.

42. The mid-mounted motor according to claim 41, **characterized in that** the output mechanism comprises an output part connected in transmission with the sprocket assembly of the power-assisted bicycle, and the exposed part of the output part that is exposed outside the casing and the protruding part are arranged on different sides of the first planetary gear.

43. The mid-mounted motor according to claim 33, **characterized in that** the ring gear structure comprises a ring gear, and the second planetary gear meshes with the ring gear.

44. The mid-mounted motor according to claim 33, further comprising: a casing, and the ring gear structure comprises:
a first ring gear, fixedly connected to the casing;
a second ring gear, rotatable relative to the casing, wherein one of the first planetary gear and the second planetary gear meshes with the first ring gear, and the other thereof meshes with the second ring gear.

45. A power-assisted bicycle, **characterized by** comprising:
a body; and
a mid-mounted motor according to any one of claims 1-44, connected to the body.
